Europäisches Patentamt

European Patent Office

Office européen des brevets

(11) Publication number: **0 269 170 B1**

## EUROPEAN PATENT SPECIFICATION

(45) Date of publication of patent specification: **26.08.92**

(51) Int. Cl.⁵: **H02K 29/08**, H02K 1/12, H02K 29/00, H02K 15/02

(21) Application number: **87202191.0**

(22) Date of filing: **11.11.87**

(54) **Brushless direct current electric motor for small outputs.**

(30) Priority: **25.11.86 IT 6787886**

(43) Date of publication of application:
**01.06.88 Bulletin 88/22**

(45) Publication of the grant of the patent:
**26.08.92 Bulletin 92/35**

(84) Designated Contracting States:
**DE ES FR GB SE**

(56) References cited:
**DE-A- 3 136 855**
**FR-A- 1 502 539**
**FR-A- 2 406 333**
**FR-A- 2 535 923**

(73) Proprietor: **ELETTROVAGO S.p.A.**
**Via Bizzozzero, 133**
**I-20032 Cormano, Milano(IT)**

(72) Inventor: **Juarez, Fernando**
**Calle Guillem Pere Eroles 26**
**Vilasar de Dalt Barcelona(ES)**

(74) Representative: **Lotti, Giorgio**
**c/o Ing. Barzanò & Zanardo Milano S.p.A. Via Cernaia 20**
**I-10122 Torino(IT)**

EP 0 269 170 B1

## Description

Many embodiments of brushless electric motors are known which are available on the market in various geometrical solutions, characterized chiefly by the choice (as a function of the use they are intended to) of an inner or an outer rotor or a stator provided with one or more poles. Moreover, the electronic circuit being an integral part of the motor itself, inasmuch as the number of the connection wires would give rise to an increase of the costs in the case where electronic circuit is positioned outside, various solutions of the connections between the electronic circuit and the motor personalize, together with the structure of the motor the various embodiments existing on the market at present.

Document DE-A-3136855 discloses a brushless D.C. motor with a stator composed of a central body and radially extending arms, which are bent to obtain a cylinder-shaped configuration and are shaped to form polar shoes at their ends.

However in this stator the form of the arms and of the polar shoes are not such as to optimize the electric circuit and do not allow to wound the wires of the winding before bending the arms.

The subject of this patent is an innovative solution of a stator structure incorporating electrical and mechanical connections for the electronic drive circuit.

This fundamental structure, according to this invention, may assume a series of possible configurations which ensures the flexibility required by the uses mentioned hereinabove.

The innovative part of what is being proposed is the stator structure (in its various embodiments) which ensures the following points of merit for a brushless motor:

1) It optimizes the wave form of the electromotive force induced for each phase, thus rendering it possible to obtain performances at high efficiences of the motor.

2) It simplifies, thereby reducing the costs of production, the provision of the magnetic circuit of the stator thus rendering available in the slots the space for a direct winding on the coil, and therefore allowing at a high speed an excellent distribution of the turns in the slot.

3) It permits, thus reducing the costs of production, the fastening of the driving shaft fixed and rigidly to the stator in the embodiment provided with an inner rotor (otherwise it would require one or two auxiliary support casings for supporting the shaft).

4) It simplifies, thus reducing the costs of production, the provision of the insulation of the windings of the iron by taking advantage of the same insulating structure to sustain the conductive elements in order to anchor to them the ends of the wound windings and weld them by an automatic procedure.

5) It simplifies, thus reducing the costs of production, the mechanical and electrical conncions of the control electronic circuit by taking advantage of the same conductive members to which the ends of the windings are connected.

6) It is simpler, thus reducing the costs of producing the mechanical connection between the motor and the remote user, due to the availability of a snap in seaming of the stator structure.

7) It renders available, where the involved powers allow it, the assembling of eventual power transistors on the iron magnetical structure, thus permitting a simple obtainment of the dissipator function.

8) It leads itself, for applications at low number of turns (for example 1.000 turns), to a solution at very low cost with a stator structure made of a single piece of massive soft iron.

For these and further objects and advantages which will be understood better from the following description, the present invention proposes to provide a stator of brushless direct current electric motors for small outputs, formed by a central body mounted on a spindle of the motor; arms extending in a radial direction from the central body and being provided at their ends with polar shoes characterized in that each arm has a width shorter than the relevant polar shoe so that they together realize a "T" configuration; the wires forming the windings of the stator being wound in the arms before bending them from a side of the central body to obtain a cylinder-shaped configuration of the stator.

The motor according to the invention will now be described in some of its embodiments with reference to the annexed drawings, in which:

Figs. 1 and 2
show the front and the side view of the central body of the stator, respectively, prior to forming the windings therein,

Figs. 3 and 4
are, respectively, a front view and a view along the cross-section IV-IV of figure, of the finished stator,

Fig. 5
is a diagrammatic view of the stator of the preceding figures, with a structural variant,

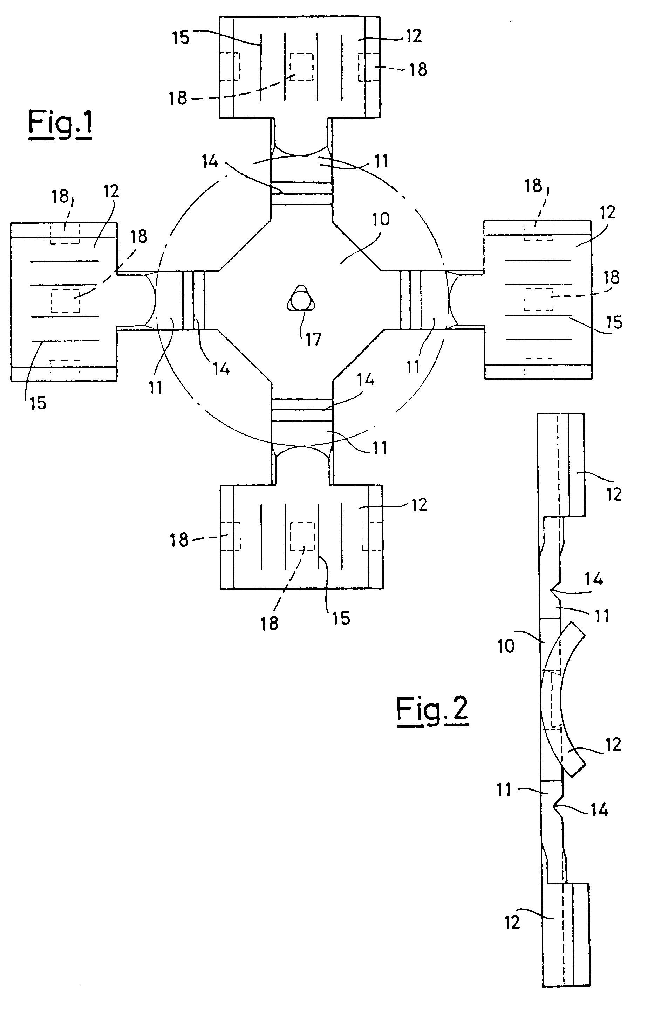

Figs. 6 and 8
are a rear and front view, respectively, of the stator shown in figs. 1 and 2, of the body of stator after the windings have been formed therein,

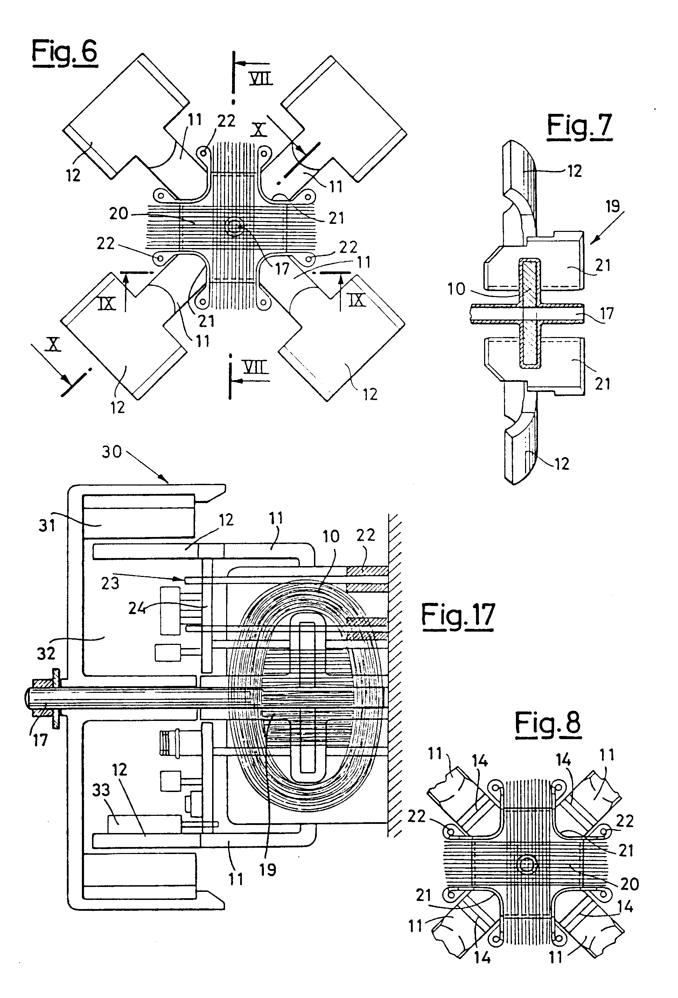

Figs. 7, 9 and 10
are sections along lines VII-VII IX-IX and X-X, of Figure 6,

- Figure 11 is a section similar to that of Figure 4, the stator is shown complete in all parts thereof,
- Figure 12 is an exploded view of an embodiment of the motor according to the invention,
- Figure 13 is an enlarged view of a detail of Fig.12,
- Figure 14 is a front view of the motor according to the invention in the variant with an outer rotor,
- Figure 15 is a front view of rhe stator according to the invention, in the three-phase variant,
- Figure 16 is a front view of the stator, as shown in Figure 5,in the one-phase variant,
- Figure 17 is a sectional view along line XVII-XVII of Figure 14 on the variant with an inner electronic control circuit.

The following description regards a biphase embodiment with an inner rotor and will be made by describing the various important performance points and/or constructive aspects of said embodiment.

All the other embodiments will be described in a more brief manner, it being an intuitive extrapolation of what has been said for the biphase embodiment.

The stator of the motor according to the invention, during the stage of production, has the configuration shown in Figure 1, i.e. a central body 10 from which four crosswise arms 11 extend, which are provided with respective polar shoes 12.

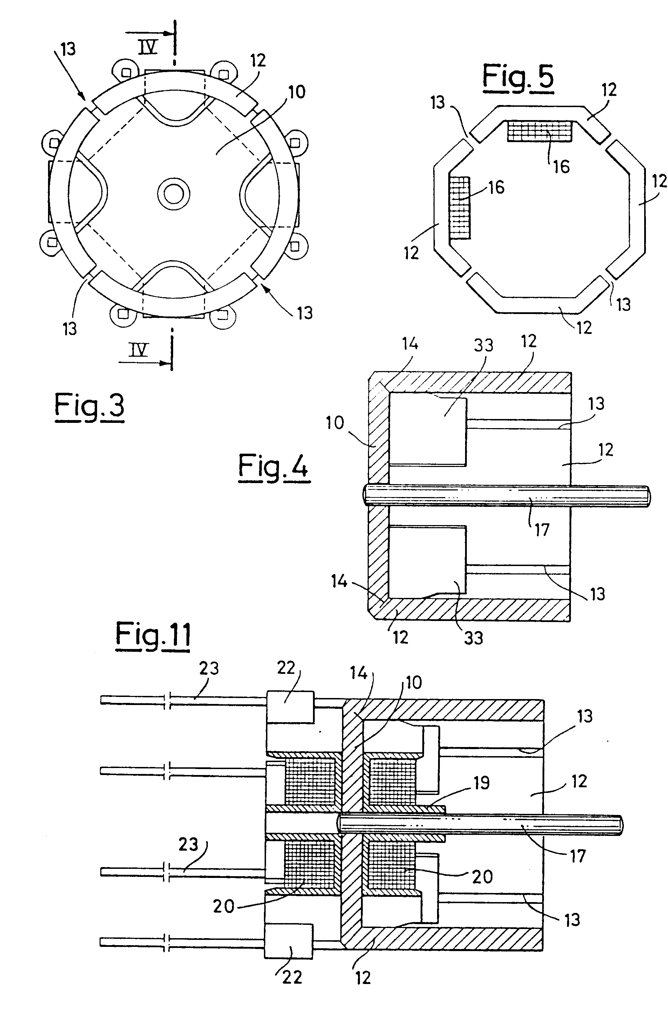

This stator, in a first embodiment thereof, is formed of a plurality of laminations each of them having the configuration of Fig. 1, assembled with each other, i.e. locked in the central region by welding points or by means of other known techniques and with the polar shoes 12 formed with a radius of curvature such (Figure 2) after a folding of 90° has been carried out on the arms 11 the polar shoes will be in the form (see Figure 3) of closed polar shoes with a perfectly circular geometry, with an air gap 13 between the polar shoes little at will and, when desired, even equal to zero.

It is known that this latter characteristic is of extreme importance for obtaining a form of induced voltage as near as possible to the rectangular form in order to obtain a high efficiency of the motor itself.

With reference again to Figure 1, transversel cuts 14 are visible in the arms 11 of the polar shoes 12, which facilitate the bending of the arms themselves in the position shown in Figure 3. Moreover, formed in the polar shoes 12 are longitudinal cuts 15, obtained by removal of material or by half-shearing with addition of the material (Figure 3), which cuts are intended to provide high impedance circuits for the eddy currents induced by the action of rotation of the magnet of the rotor.

It is to be noted, however, that according to the invention the magnetic body shown in Figure 1 may also be made (for applications at a low speed and hence low driving frequencies) in a single block of massive magnetic material, for which purpose in the arms there are provided coinages with an angularity such as to facilitate the bending and at the same time perfectly close the magnetic route once the folding of 90° has been carried out.

It is noted also that the polar shoes 12 may instead be coined according to an arc of circumference as said before, with two folds for each polar shoe so that after the folding the frontal aspect of the polar shoes will have the shape of an octogan (Figure 5) instead of that of the circle shown in Figure 3.

This renders available on each polar shoe a plane face on which it will eventually be possible to fix (by riveting, screwing,etc.) the driving power transistors 16 by using the polar shoes 12 as dissipator means when this is permitted by the involved powers and the respective thermal equilibriums.

In Figure 1 and in Figure 4 there is visible the driving shaft 17 which is fixed and rammed into the iron structure of the stator.

The shearing geometry of the polar shoes 12 may have discharge means 18, in positions dictated by the logic of the control electronics, such as Hall effect probes for drawing a signal of the position of the rotor relative to the stator (see, for example, Figure 1).

Referring now to the insulating structure 19 which lodges the windings (6-10), it may be provided both with two half-shells coined and facing one another on the iron structure, and in a single piece coined at the same time with one another.

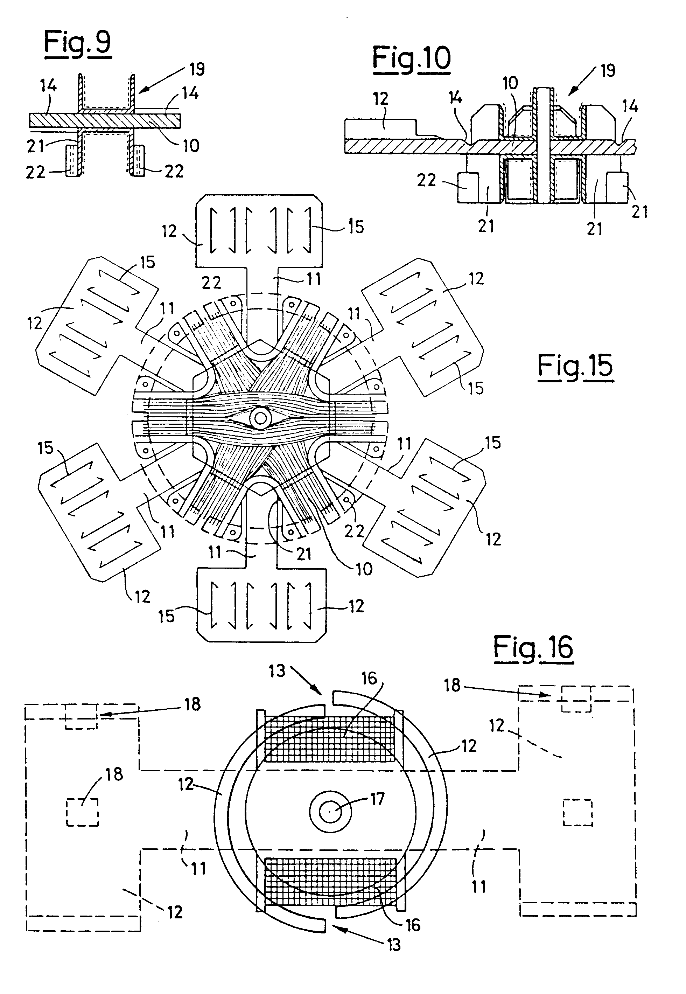

According to the invention the wire 20 is wound on the structure 19with the polar shoes still unfolded,and it can be noticed that the coil (Figures 6, 8) with which the insulating body appears is completely exposed for a bobbin-type direct winding for both windings at 90°.

In register with the arms 11 for the connection to polar shoes 12 the insulating body 19 is bent at 21 to allow,during the processing after the coiling, four punches to suitably retain the material during the operation of bending he arms by 90°.

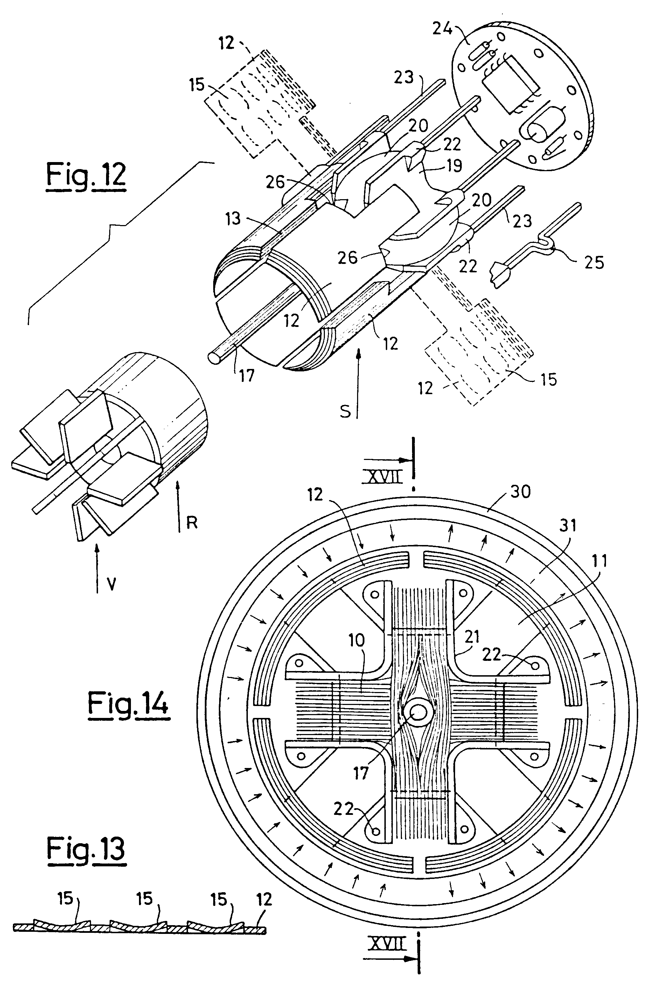

Distributed along the periphery of the insulating body are pockets 22 for housing or pressing simultaneously or for a successive press fit insertion of the conductors 23 by a pre-established length to a number of eight for the biphase type (Figure 11). To these conductors will be referred the automatic coiler for the beginning and the end of each winding desired, thus allowing, in a single (successive) operation (wave welding or tin well welding) of all the wires 20 of the coil to said conductors 23.

By way of example, for examining a complete structure of the motor, in Figure 12 there is shown an embodiment of a centrifugal ventilator, in which on the fan V, which rotates on the fixed shaft 17 of the stator S, there is fitted or pressed simultaneously the 2 pole magnet-rotor R.

As can be seen still in Figure 12, on the conductors 23 there is inserted the electronic control circuit formed on a board 24. The conductors 23 could also be bent at 25 in order to retain positioned the board 24 of the printed circuit, detached from the motor, even if this embodiment is not necessary for the correct operation of the unit.

Thus, the grooves 26 formed between adjacent polar shoes 12 may serve as a support for coupling members of the body or casing to which it is desired to fix the motor.

Three alternative embodiments of the base strcuture described hereinabove will now be described for the following extensions:
1) one-phase variant
2) three-phase variant
3) for all the three types (one-phase, biphase, three-phase) an embodiment with outer rotor and inner or outer electronic circuit.

ONE-PHASE VARIANT:

A view of the motor, with arms 11 shown by open dashed lines and then with a front view after the bending is given in Figure 16 from which appears obvious in the use of all the characteristic points of said stator structure, with the only difference that the closure of the polar shoes 12 shows a dissymetry which (as known from the state of the art) allows avoiding the stall of the motor with consequent standing start.

THREE-PHASE

The three-phase variant shown in Figure 15 with open arms 11 differs from the technical solution shown in Figures 6, 8 only in the number of arms 11 and windings for the well-known reasons.

VARIANT WITH OUTER ROTOR AND INNER ELECTRONIC CIRCUIT.

This variant, in the biphase form of application, is shown in Figures 14 and 17 in which it can be seen that the rotor (according to well-known variants already used on structures available on the market) is formed by a glass of ferrous (magnetic) material in whose inner circumference magent 31 is fixed.

According to the invention, the structure of the stator used in this application takes advantage of the space 32 within the polar shoes 12 for housing therein (Figure 17) both the signal electronic circuit mounted on the plaque 24, and to allow the fastening beneath the polar shoes (according to Figure 4) power components.

## Claims

1. A stator of brushless direct current electric motors for small outputs, formed by a central body (10) mounted on a spindle (17) of the motor; arms (11) extending in a radial direction from the central body (10) and being provided at their ends with polar shoes (12); characterized in that each arm (11) has a width shorter than the relevant polar shoe (12) so that they together realize a "T" configuration; the wires (20) forming the windings of the stator being wound on the arms (11) before bending them from a side of the central body (10) to obtain a cylinder-shaped configuration of the stator.

2. A stator as claimed in claim 1, characterized in that fixed inside the polar shoes (12) are control power transistor (16).

3. A stator as claimed in claim 1, characterized in that the wires (20) are wound on an insulating structure (19) which has pockets (22) to which respective conductors (23) are connected and to which the ends of the windings (20) are constrained.

4. A stator as claimed in claim 3, characterized in that constrained to conductors (23) are boards (24) supporting the control electronic circuit.

5. A stator as claimed in claim 1, characterized in that formed in the polar shoes (12) are probe housing seatings (18).

6. A motor as claimed in claim 1, characterized in that the polar shoes (12) are arcuate and offset relative to each other for one-phase motors.

## Patentansprüche

1. Stator für kollektorlose GleichstromElektromotoren mit geringer Leistung, umfassend einen Zentralkörper (10), der auf einer Welle (17) des Motors befestigt ist, wobei sich Arme (11) in radialer Richtung von dem Zentralkörper (10) erstrecken und an ihren Enden Polschuhe (12) aufweisen,
dadurch gekennzeichnet,
daß jeder Arm (11) eine geringere Breite besitzt als der zugeordnete Polschuh (12), so daß sie zusammen eine T-Gestalt besitzen, und daß die die Statorwicklung bildenden Drähte (20) auf die Arme (11) gewickelt sind, bevor diese von einer Seite des Zentralkörpers (10) zur Herstellung einer zylinderförmigen Gestalt des Stators gebogen werden.

**2.** Stator gemäß Anspruch 1, dadurch gekennzeichnet, daß in den Polschuhen (12) Steuerstromtransistoren (16) befestigt sind.

**3.** Stator gemäß Anspruch 1, dadurch gekennzeichnet, daß die Drähte (20) auf eine Isolierstruktur (19) gewickelt sind, welche Taschen (22) besitzt, mit denen entsprechende Leiter (23) verbunden und an denen die Enden der Drähte (20) angeschlossen sind.

**4.** Stator gemäß Anspruch 3, dadurch gekennzeichnet, daß an den Leitern (23) Platten (24) angeschlossen sind, welche die elektronische Steuerschaltung tragen.

**5.** Stator gemäß Anspruch 1, dadurch gekennzeichnet, daß in den Polschuhen (12) Aufnahmen (18) für Fühlergehäuse ausgebildet sind.

**6.** Motor gemäß Anspruch 1, dadurch gekennzeichnet, daß die Polschuhe (12) bogenförmig und für Ein-Phasen-Motoren bezüglich einander versetzt sind.

**Revendications**

**1.** Un stator de moteurs électriques à courant continu, sans balai, pour faibles puissances, formé par un corps central (10) monté sur un arbre (17) du moteur ; de bras (11) s'étendant dans une direction radiale à partir du corps central (10) et étant munis, à leurs extrémités, de pièces polaires (12) ; caractérisé en ce que chaque bras (11) a une largeur inférieure à la pièce polaire correspondante (12), de sorte qu'ils forment ensemble une configuration en ≪ T ≫ ; les fils (20) formant les enroulements du stator étant bobinés sur les bras (11), avant de les plier depuis un côté du corps central pour obtenir une configuration du stator de forme cylindrique.

**2.** Un stator conforme à la revendication 1, caractérisé en ce que des transistors de puissance de commande (16) sont fixés à l'intérieur des pièces polaires (12).

**3.** Un stator conforme à la revendication 1, caractérisé en ce que les fils (20) sont enroulés sur une structure isolante (19) qui comporte des poches (22) auxquelles des conducteurs respectifs (23) sont connectés et auxquelles les extrémités des enroulements (20) sont fixées par pression.

**4.** Un stator conforme à la revendication 3, caractérisé en ce que, sur les conducteurs (23), sont fixées par pression des plaquettes (24), supportant le circuit électronique de commande.

**5.** Un stator conforme à la revendication 1, caractérisé en ce que des socles (18) de logement de sondes sont réalisés dans les pièces polaires (12).

**6.** Un moteur conforme à la revendication 1, caractérisé en ce que les pièces polaires (12) sont arquées et décalées l'une par rapport à l'autre pour les moteurs monophasés.

Fig.1

Fig.2

Fig.3

Fig.5

Fig.4

Fig.11

Fig.6

Fig.7

Fig.17

Fig.8

## Fig.9

## Fig.10

## Fig.15

## Fig.16

Fig. 12

Fig. 14

Fig. 13